# EUROPEAN PATENT SPECIFICATION

(11) **EP 3 994 103 B1**
(45) Date of publication and mention of the grant of the patent: **28.08.2024**
(21) Application number: 20834515.7
(22) Date of filing: 25.06.2020
(51) Int. Cl.: C03B 29/08

(54) **TEMPERING FURNACE FOR A GLASS SHEET AND A METHOD FOR HEATING A GLASS SHEET FOR TEMPERING**
TEMPEROFEN FÜR EINE GLASSCHEIBE UND VERFAHREN ZUM ERWÄRMEN EINER GLASSCHEIBE ZUM TEMPERN
FOUR DE TREMPE POUR FEUILLE DE VERRE ET PROCÉDÉ DE CHAUFFAGE D'UNE FEUILLE DE VERRE DESTINÉE À LA TREMPE

(30) Priority: 03.07.2019 FI 20195604
(43) Date of publication of application: 11.05.2022
(73) Proprietor: Glaston Finland Oy, 33730 Tampere (FI)
(72) Inventor: VEHMAS, Jukka, 33730 Tampere (FI); KETO, Kyösti, 33730 Tampere (FI)
(74) Representative: LEITZINGER OY
(86) International application number: PCT/FI2020/050459
(87) International publication number: WO 2021/001599

(56) References cited:
- EP-A1- 1 491 509
- EP-A2- 1 241 143
- WO-A1-2004/087593
- WO-A1-2009/060120
- WO-A1-2020/188147
- WO-A1-2020/188147
- WO-A1-98/01398
- FI-B- 120 734
- US-A- 5 150 534
- US-A1- 2011 219 822
- US-A1- 2017 305 778

## Description

The present invention relates to a furnace for heating glass sheets to temper them. It is an object of the present invention to substantially improve the quality of tempered glass sheets and the capability of tempering furnaces in the even heating of ever more difficult glass sheets.

### Background of the invention

Tempering or heating furnaces for glass sheets, in which glass sheets move in one direction or back and forth on rotating ceramic rollers, and from which they, at a tempering temperature, move successively, side by side, or as mixed glass loadings along a roller track to a tempering cooling unit at the back of the furnace, are commonly known and used. In a tempering furnace, glass sheets are heated from a factory temperature to the tempering temperature of 610 to 680°C, depending on the thickness of the glass. The temperature in a furnace is typically 700°C. The heating of a glass sheet typically takes 40 s per one mm of glass thickness, that is, 160 seconds for the glass thickness of 4 mm, for example. The thickness of glass sheets to be tempered is usually 1 to 25 mm. EP1491509 A1 discloses a tempering furnace for a glass sheet including a conveyor for the sheet, and first blow convection means for heating the sheet by air jets from above, whereby the air is taken from the furnace and heated by upper resistors in a blow enclosure, the furnace further including second blow convection means for heating the sheet by air jets from below, whereby the air is taken from outside the furnace and heated by lower resistors. The upper and lower resistors are controlled.

US2017305778 A1 teaches a glass tempering furnace comprising at least one control unit to adjust the blowing force of the heating air and the distance between the nozzle and the glass sheet.

US5150534 A shows blowing nozzles in between rollers of a conveyor in a glass tempering furnace.

WO2020188147 A1 is disclosing a glass sheet tempering furnace. The electric elements for heating the sheets by hot air from above are not in blow enclosures but in channels leading to the blow enclosures. First and second convection blow means heat the sheet from the same side.

In a tempering furnace, heat is transferred to the glass by radiating from the inner surfaces of the furnace, by convection from air, and by direct conduction from the contact points between the conveyor and the glass sheet. In convection, or to be more precise, forced convection, air streams are directed to the surfaces of the glass sheet by means of flow machines.

Circulated air convection refers to an air blow towards a glass sheet, brought about by circulating air in the furnace by means of blowers. In pressurised air convection, the blowing of air towards the glass is carried out by leading pressurised air into the furnace from outside the furnace. In circulated air convection, the blowing pressure is typically from 100 to 2000 Pa, and in pressurised air convection from 0.1 to 5 bar. The diameters and quantities of blow openings in pressurised air convection are notably smaller than in circulated air convection. The problems with pressurised air convection in relation to circulated air convection are energy losses and inefficiency at the final stage of heating, in particular, because the air in the furnace cools down. Due to insufficient convection capability, even heating of the top and bottom surfaces of the newest glass sheets, coated to reflect more and more thermal radiation, is unsuccessful with pressurised air convection or requires an excessively long heating time. The advantages of pressurised air convection in relation to circulated air convection include very quick adjustability and a lower price of the equipment.

In terms of quality of tempered glass sheets, it is important that the glass sheets warm up evenly in the furnace. When being heated, the surfaces of the glass sheets warm up faster than the centre thickness, thereby forming a temperature profile in the thickness direction in the glass sheet. The temperature profile should be symmetric enough, in other words, the top and bottom surface should warm up at approximately the same rate. A difference in the heating rate of the top and bottom surface results in momentary bending of the glass sheet during heating due to the difference in the thermal expansion of the surface layers. The bending in question causes quality problems, such as white haze. Uncoated or so-called clear glass rather efficiently absorbs thermal radiation from a furnace. What is particularly challenging is to heat glass which has one surface, usually the top surface, coated with coatings that particularly efficiently reflect thermal radiation. Such selective and low emissivity coatings are in common use in windows, for example, to lower the energy consumption of buildings. When taking into consideration the practical quality and capacity requirements, the heating of a low emissivity, coated glass sheet is impossible without convection by means of which the radiation heating difference between a clear and coated glass sheet is compensated. In the aforementioned tempering furnace, the problem of heating glass which strongly reflects radiation on its top surface (= problem 1), the problem becoming more pronounced as the reflectivity of the coating and glass thickness increase, is thus solved by directing relatively powerful convection on the top surface of the glass by means of the inventive circulated air convection apparatus having adequate convection capability and by which convection and radiation heating may be well managed and targeted to a limited degree. The remaining problem in focusing, to be discussed next, is solved with the inventive pressurised air convection. The convection combination according the invention is also an excellent help in heating clear glass sheets.

The side and end edges of a glass sheet have a tendency of heating up slightly faster and more than the centre area of the glass sheet in a tempering furnace because the furnace surfaces radiating on them are subjected to a load and thus cool down less during a heating cycle. In addition, the heat stream conducted from the rollers through the contact points of the roller and the glass to the glass is, due to the aforementioned difference in loading, larger on the side edges, and in particular at the front ends, larger than at the centre area of the glass. At times, the surfaces of glass sheets to be tempered are only partly painted, or a low emissivity coating has been removed from the edge areas. Usually a surface differing in the aforementioned manner is the top surface of a glass sheet in a tempering furnace. For these reasons, among others, the uneven heating up of the surface area of the glass sheet leads to variation in the tempering temperature of the surface area of a glass sheet, causing quality problems in tempered glass such as anisotropy and an increase in the unevenness of a breakage pattern. To solve this problem (= problem 2), the edge areas of a glass sheet require different kind of heating compared to the remaining areas of the glass sheet. The prior art solutions for simultaneously solving problems 1 and 2 are not adequate.

In the tempering furnace of the reference publication EP2368855A2, air circulated in the furnace by a blower flows past an electric element in a nozzle enclosure and warms up before discharging as a jet from jet openings towards the glass. The heating effect of the air jets depends on the temperature of the jets, which depends on the electric current fed to the element. The electric element in the nozzle enclosure radiates heat to a nozzle deck which radiates heat to a glass sheet. This means that the radiation heating of the furnace is adjustable by the same electric element.

In the tempering furnace of the reference publication FI120734B, a glass sheet is heated by upper and lower convection blast and by upper and lower radiation heating. The tempering furnace has a plurality of nozzle pipes successively and in parallel. With the nozzle pipes, air pressurised outside the furnace by a compressor is blown as blasts on the surface of a glass sheet, and the blowing pressure of each nozzle pipe may be adjusted nozzle pipe specifically by valves outside the furnace. Adjusting is based on information on the shape of the load of glass sheets, which is obtained by the computer vision solution described in the reference publication. The convection blowing matrix described in the reference publication consists of 16 separate areas of adjustment whose blowing pressures may be adjusted by transverse and longitudinal adjustment valves.

### Brief description of the invention

To solve the prior art problems, the present invention relates to a tempering furnace for a glass sheet, which has a conveyor for the glass sheet, first convection blow means over the conveyor to heat the glass sheet by hot air jets blown on its top surface, whereby the first convection blow means include a blower pressurising air sucked from the tempering furnace, air channels to lead air from the blower to blow enclosures which have, on their bottom surfaces, first blow openings from which air is discharged as jets towards the top surface, electric elements inside the blowing channels heating air, and second convection blow means with the aid of which pressurised air from outside the tempering furnace may be led to second blow nozzles from which air is discharged as jets towards the bottom surface of the glass sheet, and the electric elements of the first convection blow means form a matrix-like separately-adjustable electric element field whereby the heating effect of the air jets on the glass sheet is arranged to be adjustable by adjusting the feeding of electric current to the electric elements, and the blow nozzles of the second convection blow means of the tempering furnace form blow zones, separately-adjustable in a matrix-like manner, the heating effect on the glass sheet of the jets discharged from the second blow nozzles inside the blow zones being arranged to be adjustable by adjusting the blowing pressure of feed pipes.

The invention additionally relates to a method for heating a glass sheet for tempering, in which method the glass sheet runs on a roller track in a tempering furnace, whereby the glass sheet is heated from the top and bottom sides and the top surface of the glass sheet is heated by hot air jets from the first convection blow devices, which are formed by sucking air from inside the tempering furnaces and pressurizing said hot air, heating it with electric elements inside blow enclosures, blowing the air as jets towards the top surface of the glass sheet, and blowing pressurised air taken from outside the tempering furnace by second convection blow means, wherein the heating effect on the glass sheet top surface of the air jets discharging from the blow enclosures of the first convection blow means towards the glass sheet is adjusted by adjusting the feeding of electric current to the electric elements, and the heating effect of the air jets discharged from the blow nozzles (11) of the second convention blow devices of the tempering furnace on the bottom surface of the glass sheet is adjusted by adjusting the feeding of air stream to the blow nozzles, and the heating effect is adjusted weaker at the front and rear end, and/or side edges, of the glass sheet moving in the tempering furnace than at the centre area of the glass sheet.

The inventive tempering furnace exhibits, over the glass loading, powerful circulated air convection which is adjustable in a matrix-like manner to carry out even heating of glass sheets that strongly reflect radiation on their top surfaces, and below the glass loading, dense pressurised air convection adjustable in a matrix-like manner to improve focusing of heating. Such a combination simultaneously solves the problem of heating glass that strongly reflects radiation on its top surface (= problem 1) and the problem of overheating the edge areas (or other deviating areas) of the glass (=problem 2). Such convection capability of the furnace makes it possible to heat the glass sheets ever more evenly and controllably, which improves the quality of the finished tempered glass.

As pointed out in the above, circulated air convection is generally speaking more efficient than pressurised air convection. Enhancing pressurised air convection is restricted by the air in the furnace cooling down and increased energy consumption along with the consumption of pressurised air. Circulated air convection does not have such restrictions. The main benefit of the inventive circulated air convection is its efficiency in relation to pressurised air convection, allowing fast and even heating of glass that reflects radiation. In addition, the adequately dense separate matrix-like adjustability of the inventive circulated air convection helps the aforementioned primary heating to succeed when heat is automatically transferred adjustment area specifically according to the local load, that is, the heat transferred to the glass. This also prevents an area of the furnace without glass from heating above a set value, whereby the furnace receives the subsequent glass sheet or load of glass well-balanced. Circulated air convection according to the invention may also be used for lateral profiling of heating, which can be done by setting lower set values for the electric elements (thermoelements) over the side edges of a glass sheet than for the electric elements between them. The profiling can, however, be accomplished in the manner described in the above only when the glass sheets of the load of glass are approximately of the same size and placed in successive approximately straight rows, i.e. their side edges are approximately on the same line in the direction of movement of the glass. In addition, the profiling need in the subsequent load of glass may be different or in another place of the furnace, and the furnace has no time without an additional delay period to be balanced temperature-wise before it moves into the furnace. In such a case, the profiling of the previous load of glass also partly affects the new load of glass, but the area of influence is wrong.

By momentarily changing the set values of the electric element field that heats the blowing air of circulated air convection it is not possible to prevent the front and rear ends of a glass sheet from overheating in relation to the remaining length of the glass, because the adjustment of the electric current of the electric element only shows in the heating with a delay which, in relation to the movement rate of the glass in the furnace, is much too long to focus additional convective heating on the aforementioned remaining glass length.

The overall benefit of pressurised air convection is its very fast adjustability, which the invention fully utilizes. By means of the pressurised air convection according to the invention, a different convection may be focused at different points of a bottom surface of a glass moving in a furnace, that is, convection may be focused on the centre area of the glass and leave the end and side edges without it. This way, overheating of the side edges of a glass sheet may be reduced, which is not possible by circulated air convection for the aforementioned reasons, or is at least very limited, such as with the inventive circulated air convection. According to vehicle standards, to prevent the formation of too large longitudinal glass fragments, which are prohibited in broken tempered safety glass, it is even advantageous to overheat the centre area of the glass in relation to glass edges, which may also be successfully accomplished with the inventive convection. Locally focused convection within the surface area of a glass sheet may also affect so as to prevent the glass sheet from bending when it is heated.

The aforementioned goal of the invention as a solver of prior art problems is achieved according to the present invention by combining circulated air convection overhead the glass sheet and adjustable in a matrix-like manner to carry out even heating of glass sheets with pressurised air convection underneath the glass sheet and adjustable in a matrix-like manner to improve the focusing of heating.

In the patent application, a convection blowing system adjustable in a matrix-like manner refers to such convection blow means that are divided into separately adjustable subareas both in the longitudinal and lateral direction of a tempering furnace. The subareas of the separately adjustable matrices are advantageously short and narrow, which improves the matrix-like adjustability and results in the advantages the invention aims at. The essential fact is that the heating up of the glass moving in the furnace may be managed both in the longitudinal and lateral directions of the glass, that is, convection may be focused in a matrix-like manner within the surface area of the glass. The smallness of the adjustment area is mostly limited by the rising costs in accordance with the quantity of the adjustment areas. Advantageously, focusing of some sort is achieved on a glass sheet 0.5 m wide and long, and convection focusing that is at least satisfactory is achieved on a glass sheet 1 m wide and long. The length of the glass sheets in the direction of movement of the glass heated up by the device in the furnace is usually 0.25 to 6 m and width 0.1 to 3.3 m. The width of the heating area of the furnace is usually 1.2 to 3.5 m, and the length 4 to 10 m. One load of glass may have as many as tens of glass sheets, depending on their size.

Preferred embodiments of the present invention are disclosed in the dependent claims.

In the following, the invention is described in closer detail with reference to the accompanying drawings, in which:
- Figure 1: is a side view (to direction z) of the inventive device according to a preferred embodiment
- Figure 2: is an end view (to direction x) of the device according to Figure 1, and
- Figure 3: shows blow enclosures overhead the glass sheet in accordance with the embodiment shown in Figure 1, from below (as seen in direction y),
- Figure 4: shows is a top view of the blow nozzles underneath the glass sheet in accordance with the embodiment shown in Figure 1 (as seen in direction y),
- Figure 5: is a schematic view of the device according to the invention
- Figures 6A-B: show alternative structures of a blow nozzle to even out the convection it has created in the lateral direction of the furnace.

### Detailed description of the invention

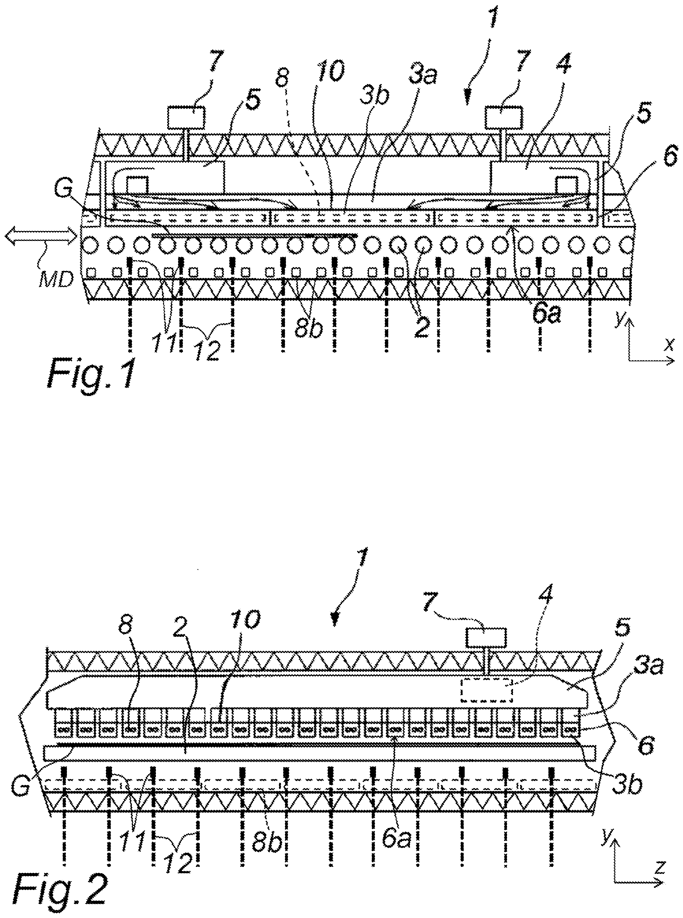

Figures 1 and 2 show the inventive device to heat glass sheets for tempering. The device includes a tempering furnace which is denoted with the reference number 1. The tempering furnace 1 has a longitudinal and lateral direction, and a glass sheet moves in there from a loading table. Within the tempering furnace 1, a conveyor 2 has been arranged, which is a roller track, for example, on top of which glass sheets G may be carried in the longitudinal direction of the furnace. In the so-called continuous tempering furnace, a glass sheet moves through the furnace once, only, and in the so-called oscillating tempering furnace, a glass sheet moves back and forth until the heating time is up. In Figures 1, 3, and 4, the arrow MD indicates the movement direction of the glass inside an oscillating furnace. The rate of movement of the glass sheet in a tempering furnace is typically 50 to 200 mm/s. In an oscillating furnace, the rate at the moment at the time the direction changes is 0, from which the rate accelerates to the aforementioned value. From the tempering furnace, the glass sheet is transferred to a temperer in which it is intensely cooled down with air jets. The transferring rate is typically 200 to 600 mm/s.

Above the conveyor, advantageously at a short distance of typically 5 to 20 cm, advantageously 7 to 13 cm, there are arranged blow enclosures 6 on the side below which, on a so-called nozzle deck 6a, blow openings 9 have been formed to blow heated convection air towards the conveyor and, in particular, towards the glass sheet G being conveyed on the conveyor. The blow openings 9 are typically holes machined in a plate and having a diameter of 5 to 15 mm. To circulate the convection air blown on the glass sheet G, the tempering furnace 1 has means 3 to 8 arranged in it.

The blow enclosure 6 consists of a dividing part 3a in which air flown from division channels 5 in the lateral direction of the furnace, and blow part 3b which has electric elements 8 in it. In the blow enclosure, the dividing part 3a is connected to the blow part 3b by a perforated plate 10. The purpose of the perforated plate 10 is to even out blowing pressure differences between the various blow openings 9 of the blow enclosure. The blow openings 9 are on the nozzle deck 6a, on the surface of the blow enclosure 6, which faces the glass. The division channels 5 are equipped with recirculation blowers 4 which are inside the furnace 1. The drive motor 7 of the recirculation blower 4 is arranged on the outside of the furnace 1. It is provided with a frequency converter by means of which the rotating speed of the impeller of the blower may be varied and thus the blowing pressure of the blow openings covered by the blower adjusted. The furnace has one of more of the units shown in Figure 1 successively.

Inside the blow enclosures 6, electric elements 8 have been arranged, with the air fed in the blow enclosure 6 heating up when it flows between them, and thus flows hotter into the blow openings 9 from which the air is discharged as jets towards the glass sheet G.

Each of the separately adjustable electric elements 8 has its own adjustment sensor which is advantageously attached to the bottom surface of the blow enclosure, in other words, the surface facing the glass. The sensor may also be placed slightly, advantageously approximately 1 to 30 mm, closer to glass sheet than the aforementioned bottom surface, or in a centralised manner in a blow opening i.e. air jet of a blow enclosure portion covered by one electric element. The adjustment sensor is advantageously a thermoelement. A dedicated set value temperature may be set for each thermoelement, and a dedicated so-called firing time for the electric element. The firing time determines the longest possible on time for the electric element, so the time period of feeding electric current, during one adjustment period. An advantageous duration for the adjustment period of the electric elements is 1 to 7 s. A firing time shorter than the adjustment period may thus be used to limit the power averaged in relation to the duration of the adjustment period of the electric element. Both the thermoelement set value and the firing time may be used to adjust different convection and radiation heating for adjacent and successive blow zones in the blow field. By adjusting the blowing pressure in the manner described in the above with a frequency converter, an adjustment matrix equally dense would require a dedicated blower and frequency converter for each nozzle enclosure, or some kind of blow enclosure specific flap valves that are difficult to implement and work imprecisely.

In addition, inside the tempering furnace, blow nozzles 11 have been arranged in a matrix-like manner to blow air through the gaps between the rollers 2 on the bottom surface of the glass sheet. Pressurised air is led into the blow nozzles through feed pipes 12.

In the drawings, the x direction is the direction of travel of the glass sheet, for which the z direction is the transverse horizontal direction. The y direction is the vertical direction

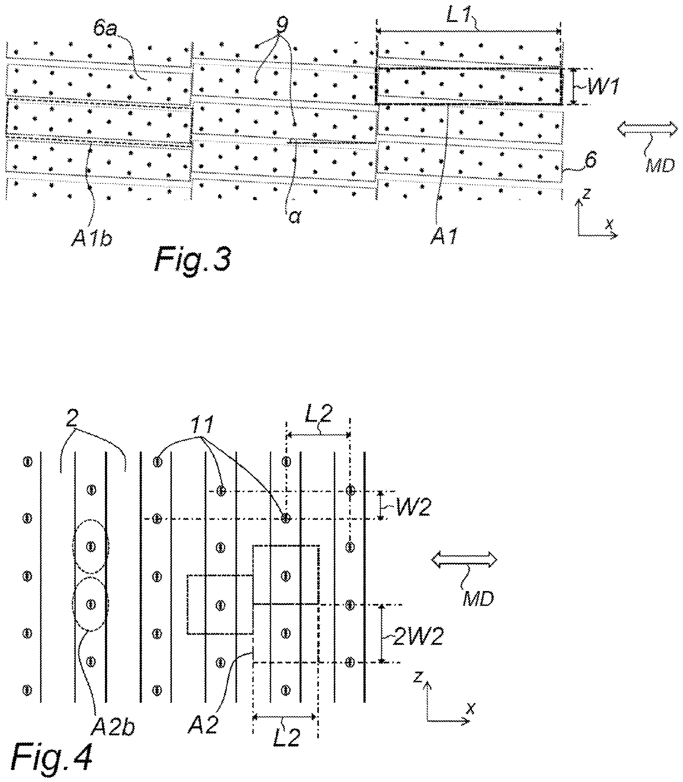

Figures 3 and 4 show an advantageous embodiment of the device according to the invention. Figure 3 shows the blow enclosures 6 as seen from below. Here, each blow enclosure 6 is at the blow part 3b divided into successive enclosure parts of which 6a is a nozzle deck of one enclosure part, and of these each successive enclosure is installed at an acute angle α in relation to the travel direction x of the glass, whereby a staggered structure is formed even though the enclosure parts are in line in the travel direction of the glass in relation to each other. The aforementioned angle α is advantageously 2 to 10 degrees, more advantageously approximately 3 to 5 degrees. The enclosure parts may also be in straight rows without the staggering, whereby the direction of the rows and blow enclosure 6 is at the aforementioned angle in relation to the direction of travel x of the glass. In such a case, one nozzle deck 6a may be of the length of the entire blow enclosure 6, that is, one blow enclosure has one enclosure part, only.

In Figure 4, in the gaps between the rollers 2, blow nozzles 11 are arranged in a matrix-like pattern. The blow nozzles 11 may be holes machined in the feed pipes 12, or separate nozzles fixed to the feed pipes. The flow cross sectional area of one blow nozzle is advantageously 0.5 to 4 mm². The blow nozzles 11 are approximately in the longitudinal lines of the furnace and lateral rows of the furnace, the rows being in the longitudinal direction of the furnace, so the x direction, at a distance L2 from each other. The distance L2 is typically 50 to 500 mm and advantageously 100 to 300 mm. Typically the distance L2 is 1 to 4 roller spacings (roller spacing = L2 in Figure 4) and advantageously 1 to 2 roller spacings. In Figure 4, the blow nozzles are so arranged that in the same line in the lateral direction of the furnace there is a blow nozzle 11 in every other gap between rollers, only, and the distance between blow nozzles is L2*2. In Figure 4, the blow nozzle lines in the longitudinal direction of the furnace are in the lateral direction of the furnace, so the z direction, at a distance W2 from each other. The distance W2 is typically 20 to 250 mm and advantageously 30 to 140 mm. The distance between blow nozzles in the same gap between rollers, which in Figure 4 equals 2W2, is advantageously 40 to 250 mm. The dimensions referred to in the above for the rows and lines of blow nozzles also apply to the positioning of the separately adjustable blow nozzles in the furnace.

In Figure 3, the blow nozzles 6 are in the longitudinal direction of the furnace. In such a case, the width of the separately adjustable blow zone of circulated air convection in the lateral direction W1 of the furnace is advantageously, and in Figure 3, the same as the blow enclosure distribution in the lateral direction of the furnace, so the width of the blow enclosure and gap in the lateral direction of the furnace. Typically, W1 is 30 to 300 mm and advantageously 60 to 160 mm. The length L1 of the separately adjustable blow zone of circulated air convection in the longitudinal direction of the furnace is typically 200 to 1500 mm and advantageously 300 to 1000 mm. Advantageously and in Figure 3 the length L1 is the same as the length of the enclosure part in the longitudinal direction of the furnace.

Figures 3 and 4 show in closer detail the size of separately adjustable areas of the convection blow means of Figures 1 to 2. The surface area of one separately adjustable area of influence on a glass surface is A1b which in the z direction is slightly wider than the width of the nozzle deck 6a. This is the case because the blow jets affect a wider area on the glass surface than the surface area of the nozzle deck, depending on their blow distance to the glass. According to the preferred embodiment, the surface area of one separately adjustable area of influence of the second convection blow means on the surface A2b of the glass is oval shaped in Figure 4. The pattern, as to its opening, corresponds to the blow nozzle 11 whose flow opening in the z direction is slightly wider than in the x direction. The figure does not show that the effect on the glass surface is biggest at the hitting centre point of the blow nozzle, and rapidly decreases when moving further away from it in the glass surface direction. In fact, it is impossible to determine unambiguously the exact size A2b of the area of influence of the blow nozzle 11 because it depends on the blow distance, that is, the distance in the y direction between the glass sheet and opening of the blow nozzle, and additionally on the definition of which kind of convection level is considered effective. Therefore, the size of cells C1i and C2i of the adjustment matrices C1 and C2, that is, the surface area of one separately adjustable area of influence of the convection blow means, is determined with cover areas A1 and A2. The cover area A1 is the surface area of the furnace heating area, or more specifically, the blow zone covered in the furnace A1tot by the first convection blow means, divided by the number N1 of separately adjustable electric elements in the blow enclosures within the area A1tot, and cover area A2 is the blow zone in the oven covered by the second convection blow means A2tot, divided by the number N2 of separately adjustable blow nozzles within the area A2tot. In Figure 3, the surface area A1b is approximately equal to the surface area A1, because the gaps 13 between the blow enclosures are narrow. As the separately adjustable areas consist of one enclosure part of one nozzle enclosure, with its electric elements, and one blow nozzle 11, the cover area A1 with the Figure 3 markings is W1*A1, and with the Figure 4 markings the cover area A2 is 2W2*L2. Advantageously, the cover area A1 is 200 to 1500 cm2 and cover area A2 is 50 to 600 cm2. In addition to the pursued adjustment resolution, the number N1 and N2 of the furnace-specific cells of the adjustment matrix depend on the furnace size. They typically increase as the size of the furnace increases. In a furnace N1 is at least 40 pcs and N2 is at least 40 pcs. In one furnace N1 is advantageously at least 80 pcs and N2 at least 160 pcs.

According to a preferred embodiment, there are at least 6 pcs of separately adjustable blow zones of the first convection blow means in the lateral direction of the tempering furnace in the same lateral area, and at least 8 pcs of separately adjustable blow zones of the second convection blow means in the lateral direction of the tempering furnace at the same gap between rollers, and at two successive gaps between rollers at least 16 pcs.

According to a second preferred embodiment, there are at least 6 pcs of separately adjustable blow zones of the first convection blow means in the longitudinal direction of the tempering furnace in the same longitudinal area, and at least 12 pcs of separately adjustable blow zones of the second convection blow means in the longitudinal direction of the tempering furnace in essentially the same longitudinal line.

As described in the preferred embodiment of Figures 1 to 4, the second convection blow means comprise feed pipes 12 passing through the bottom of the furnace, which are adapted to run between the gaps of the bottom electric elements 8b and which end at the second blow nozzles 11.

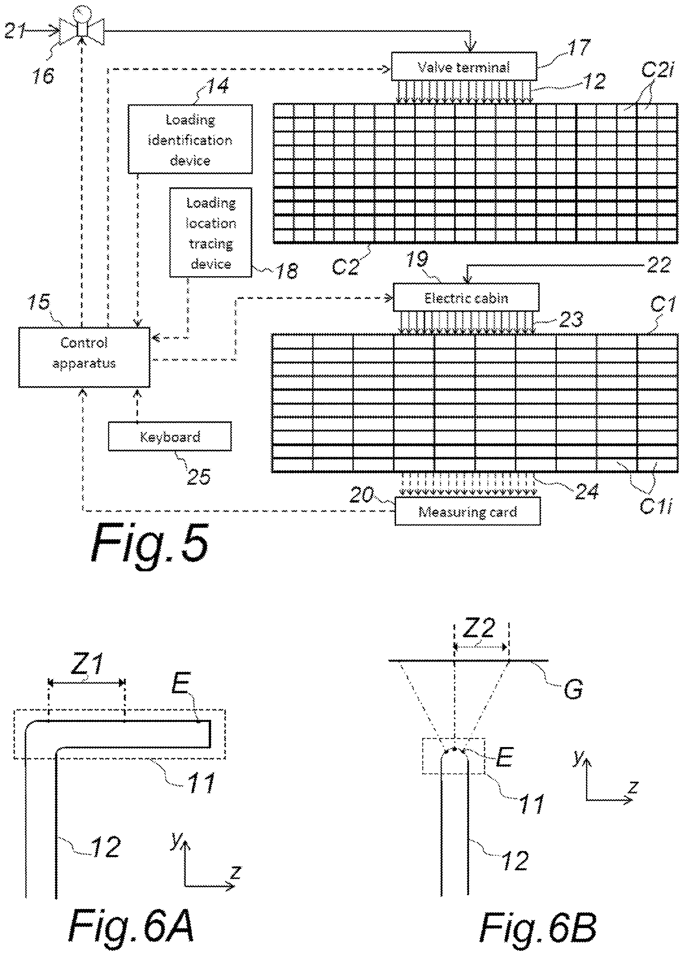

Figure 5 is a schematic view of the device according to the invention. The tempering furnace comprises a detector 14 which reads information concerning the loading of glass sheets, which may be, for example, a camera shooting the load of glass on a loading table, or a dense row of capacitive or optical sensors transversely to the direction of movement of the glass, over which the load of glass moves as it is being transferred to the tempering furnace. The detector 14 sends its information, that is, information needed for solving the shape dimensions of the load of glass, to a control device 15 which is a computer, for example. The tempering furnace further comprises a device 18 producing information needed to determine the location of the glass sheets within the glass furnace, which is, for example, a servo motor of the conveyor of the tempering furnace, or a pulse sensor connected to the actuators of the conveyor.

The second convection blow devices are controlled as in the following, for example. An operator uses a keyboard 25 to give a control device 15 the blowing pressure and glass sheet specific blow zone where the blowing from blow nozzles 11 is to be focused. As mentioned, the blow pressure of the separately-adjustable blow nozzles of the furnace changes in relation to at least the location of the glass sheets so that the blowing pressure is higher in the centre area of the glass sheets than in a glassless area of the furnace or in the edge area of the glass sheets. The control device 15 may itself also select this information on the basis of the glass sheet size, for example. The adjustment setting defines 3 bar, for example, as the blowing pressure, and the entire surface area of the glass sheet as the blow zone, excluding 20 cm from the front and rear ends, and 15 cm from both side edges. An adjustment valve 16 adjusts itself to the set value of the blowing pressure, that is, chokes the pressure of the pressurised air source 21 to the 3-bar feed pressure of a valve terminal 17. The pressurised air source, so the device feeding pressurised air in from outside the furnace, is advantageously a pressurised air compressor with an advantageous delivery overpressure of 6 to 12 bar. The blowing pressure into the furnace, that is, pressure difference over the blow nozzle, is advantageously 0.5 to 4 bar. The load of glass moves on to the furnace. The valve terminal 17 has a dedicated valve for each separately adjustable unit, so cell C2i, of the adjustment matrix C2 of the second convection blow devices. The valve is advantageously a shutter valve, that is, a valve having open and closed positions, only. The control device 15 controls the valves of the valve terminal by using information obtained from the detector 14 and device 18 so that the adjustment setting of the blow zone is realised as accurately as possible. The accuracy is limited by the width and length of the cells C2i, and by how the glass sheets are located in the furnace in relation to the cells. The accuracy may be improved by shortening the aforementioned dimensions of the cells. The profiling of the convection in the lateral direction of the glass is also improved by taking into account the location of the profiling lines in positioning the side edges of the glass when the glass sheets are being placed on the loading table. The control device may neglect the profiling and blow onto the entire glass, if an accurate enough calculated profiling cannot be obtained for the glass sheet. The blowing of pressurised air from blow nozzles at glassless areas is cut off. When the valve is open, pressurised air flows along the feed pipe 12 to the blow nozzle 11 from which it is discharged towards the glass sheet. Each cell C2i has its own feed pipe 12. When the valves of the valve terminal are of the type of the adjustment valve 16, a different blowing pressure may be set for different blow zones. The air discharge from a blow nozzle is linked to the blowing pressure. Both shutter and adjustment valves are thus used to adjust the mass flow of air discharged from the blow nozzles. The local heat flow q transferring from air to the glass sheet is the product of the convective heat transfer coefficient and the temperature difference between the air (Tair) and the glass sheet surface (Tglass), that is, q=h(Tair-Tglass). As the mass flow increases, the rate of the jet hitting the glass sheet increases, which adds to the heat transfer coefficient h. Thus, heat transfer to the glass sheet is increased, so the heating effect of the air jets on the glass sheet is enhanced. Therefore, the heating effect on the glass sheet of the air jets discharged from the blow nozzles of the second convection blow devices is arranged adjustable by a valve by adjusting the feeding of the air stream to the blow nozzles.

The first convection blow devices are controlled as in the following, for example. An operator chooses a blowing pressure for the blow nozzles 9. The blow pressure is typically set the same in each blower unit of the furnace, and it may be set to change in the middle of heating a glass sheet. The operator uses a keyboard 25 to enter the set temperatures and/or firing times for all the separately adjustable electric elements of the adjustment matrix C1, that is, cells C1i. The operator may, for example, drop the cells at the edges of the glass sheet to the set value 680⁰C and keep the rest of the cells at the set value 700⁰C, and shorten the firing times of the electric elements at the beginning and end part of the furnace by 50%. The load of glass moves on to the furnace. Each cell C1i has its own switch in an electric cabinet 19, and a feed cable 23 for electric current. The switch is used to cut the electric current that an electric network 22 supplies to the electric element. The control device 15 controls the switches in the electric cabinet on the basis of the temperatures measured by the temperature sensors, set values of the temperatures, and firing times. There is a plurality of temperature sensor cables 24 connected to one measuring card 20. The heating effect of the air jets of the first convection blow devices on the glass sheet increases, because the electric element increases the temperature of the air jet, whereby the term (Tair-Tglass) in the aforementioned equation increases. Increasing the set temperature in cell C1i adds to the heat stream from the cell C1i to the glass sheet, so the consumption of electric current of the electric element of the cell also increases. Thus, both the set temperature and firing time affect the supply of electric current to the electric element. Therefore, the heating effect on the glass sheet of the air jets discharged from the blow nozzles of the first convection blow devices is arranged adjustable, adjustment area specifically, by adjusting the feeding of electric current to the electric element.

As noted in the above, the shape of the flow opening of the blow nozzles 11 is advantageously such that the jet discharged from them is wider in the lateral direction of the furnace than in the direction of movement of the glass inside the furnace. In such a case, the convection created by the jet on the surface of the glass evens out in the lateral direction of the glass. Figures 6A and 6B show further advantageous alternatives for evening out convection caused by a blow nozzle on a bottom surface of a glass sheet in the lateral direction of the furnace. In Figures 6A and 6B, one feed pipe 12 feeds air to a blow nozzle that has three separate flow openings. Advantageously, one blow nozzle (11) covers 3 separate flow openings (E), at most, which blow towards the glass sheet at different places of at least 10 mm and no more than 50 mm (5 ≤ Z1 ≤ 60 mm) in the lateral direction of the furnace, or their focusing centre points on the bottom surface of the glass sheets are at different locations of at least 10 mm and at most 50 mm (5 ≤ Z2 ≤ 60 mm) in the lateral direction of the furnace.

One feed pipe 12 may feed air to a plurality of blow nozzles when it is branched at the end to different blow nozzles. However, the blow openings of the separately adjustable blow zone of the second convection blow means advantageously consist of 2 blow nozzles, at most, so as to make the blow zones suitably sized The force of a single jet released from the blow nozzle of the second convection blow means must be sufficient so that its heating effect on the glass sheet is significant. To guarantee the above, the blowing distance to the glass has to be short enough. The blow nozzles are advantageously at the vertical distance of 150 mm, at most, from the surface of the glass. Advantageously, the blow nozzles are at a vertical distance of no more than the diameter of the roller 2 + 30 mm from the bottom surface of the glass.

According to an advantageous solution, the blowing pressure of the second convection blow devices changes in the middle of heating so that the blowing pressure of a jet hitting the centre area of a moving glass sheet is low, or even off, at the beginning of heating, because the aforementioned problem 1 is at its worst at the early stage of heating. At the same time, the set value for the blowing pressure of the first convection blowing devices is at its highest. Local focusing of the heating effect of the second convection blow devices within the surface area of the glass sheet is only commenced after at least 10% of the heating time has passed. The blowing pressure of the second convection blow devices onto the centre areas of the glass sheet is thereby at least doubled in order to be able to solve the aforementioned problem 2, too.

A solution according to an embodiment of the invention features, above a glass sheet, both circulated air convection adjustable in a matrix-like manner and pressurised-air convection adjustable in a matrix-like manner, so-called third convection blow devices, and below the glass sheet there is pressurised-air convection adjustable in a matrix-like manner. Such a combination improves focusing the heating within the surface area of the glass sheet when the inventive pressurised air convection also acts on the top surface of the glass. On the other hand, adding pressurised air convection pipes over the glass sheet and among circulated air convection is difficult and adds to the cost. The features described in the above for the second convection blow devices also suit the third convection blow devices, but instead of rollers, their positioning is restricted by the blow enclosures of the first convection blow devices. Advantageously, air from outside the furnace is fed to the blow nozzles of the third blowing devices with feed pipes running through the ceiling of the tempering furnace and adapted to run in the gaps between the blow enclosures so that the blow nozzles are in the gaps between the blow enclosures or closer to the glass sheet than the blow openings of the first convection blow means. Advantageously the blowing distance to the glass is no more than 150 mm.

The invention described in the above is not restricted to the disclosed embodiment, but it may be varied in a number of ways within the scope defined by the claims. For example, the blow enclosures may be longitudinal, transverse, or at any skew angle in relation to these directions. The gas circulated in or blown into the furnace may be other than air, too. It may also be a mixture of air and another gas. The channels feeding air to the blow enclosures may differ from the described and it may have a different number of blowers.

## Claims

1. A tempering furnace for a glass sheet, which has a conveyor for the glass sheet, a detector providing information required to determine the shape dimensions of a load of glass, a device producing information required to determine the momentary location of the glass sheet inside the tempering furnace, first convection blow means to heat the glass sheet by hot air jets, whereby the first convection blow means include a blower pressurising air sucked from the tempering furnace, air channels to lead air from the blower to blow enclosures (6) which have, in their surfaces facing the glass sheet, blow openings (9) from which air is discharged as jets towards a top surface of the glass sheet, electric elements (8) inside the blow enclosures, warming up air, and second convection blow means, control devices for controlling valves of the second convection blow means based on the shape dimensions of the load of glass and the location of the glass sheet, by means of which second convection blow means pressurised air external to the tempering furnace may be led to blow nozzles (11) from which air is discharged as jets towards a bottom surface of the glass sheet, **characterised in that** the electric elements and blow enclosures of the first convection blow devices form a plurality of separately-adjustable blow zones in the longitudinal and lateral direction of the tempering furnace, in which the heating effect of the air jets on the glass sheet is arranged to be adjustable by adjusting the feeding of electric current to the electric elements, there being at least 40 pieces (N1) of these separately-adjustable blow zones in the tempering furnace, and the blow nozzles (11) of the second convection blow means of the tempering furnace form a plurality of separately-adjustable blow zones in the longitudinal and lateral direction of the tempering furnace, in which the heating effect on the glass sheet of the jets discharged from the blow nozzles (11) is arranged to be adjustable by adjusting the feeding of an air stream to the blow nozzles, there being at least 40 pieces (N2) of these separately-adjustable blow zones in the tempering furnace.

2. A tempering furnace as claimed in claim 1, **characterised in that** the separately-adjustable blow zones of the first convection blow means are with a separation (L1) of less than 1500 mm in the direction of movement of the glass sheet, and with a separation (W1) of at most 300 mm in the direction transverse to the direction of movement of the glass sheet, and the separately-adjustable blow zones of the second convection blow means are with a separation (L2) of at most 500 mm in the direction of movement of the glass sheet, and with a separation (W2) of at most 250 mm in the direction transverse to the direction of movement of the glass sheet.

3. A tempering furnace as claimed in claim 1, **characterised in that** the separately-adjustable blow zones of the first convection blow means are with a separation (L1) of less than 1100 mm in the direction of movement of the glass sheet, and with a separation (W1) of at most 160 mm in the direction transverse to the direction of movement of the glass sheet, and the separately-adjustable blow zones of the second convection blow means are with a separation (L2) of at most 300 mm in the direction of movement of the glass sheet, and with a separation (W2) of at most 140 mm in the direction transverse to the direction of movement of the glass sheet.

4. A tempering furnace as claimed in claim 1, **characterised in that** there are at least 6 pieces of separately-adjustable blow zones of the first convection blow means in the lateral direction of the tempering furnace in the same lateral area, and at least 8 pieces of separately-adjustable blow zones of the second convection blow means in the lateral direction of the tempering furnace at the same gap between rollers, and at least 16 pieces at two successive gaps between rollers.

5. A tempering furnace as claimed in claim 1, **characterised in that** there are at least 6 pcs of separately-adjustable blow zones of the first convection blow means in the longitudinal direction of the tempering furnace in the same longitudinal area, and at least 12 pieces of separately-adjustable blow zones of the second convection blow means in the longitudinal direction of the tempering furnace in the substantially same longitudinal line.

6. A tempering furnace as claimed in claim 1, **characterised in that** there are at least 80 pieces (N1) of separately-adjustable blow zones of the first convection blow means in the tempering furnace, and at least 160 pieces of separately-adjustable blow zones of the second convection blow means in the tempering furnace.

7. A tempering furnace as claimed in claim 1, **characterised in that** in addition to the first and second convection blow means there are third convection blow means in the tempering furnace above the glass sheet, by means of which pressurised air external to the tempering furnace may be led to blow nozzles of the third blow means, which form a plurality of separately-adjustable blow zones in the longitudinal and lateral directions of the tempering furnace, in which the heat effect of the air jets discharged from the blow nozzles onto the glass sheet is arranged to be adjustable by adjusting the feeding of an air stream to the blow nozzles, and the tempering furnace having at least 40 pieces of the separately-adjustable blow zones.

8. A tempering furnace as claimed in claim 7, **characterised in that** air is fed to the blow nozzles of the third blow means by feed pipes which run through the ceiling of the tempering furnace and which are adapted to run in the gaps between the blow enclosures (6) so that the blow nozzles are in the gaps between the blow enclosures (6) or closer to the glass sheet than the blow openings (9) of the first convection blow means.

9. A tempering furnace as claimed in claim 1, **characterised in that** one separately-adjustable blow zone of the first convection blow means covers a heating surface area (A1) of at most 1500 cm2 of the tempering furnace, and one separately-adjustable blow zone of the second convection blow means covers a heating surface area (A2) of at most 600 cm2 of the tempering furnace.

10. A tempering furnace as claimed in claim 1, **characterised in that** the feed pipes (12) of the second convection blow means are adapted to run into the tempering furnace through its bottom and between the gaps of the bottom electric elements so that the blow nozzles blow air towards the bottom surface of the glass sheet from gaps between the rollers with the vertical blow distance of no more than 150 mm.

11. A tempering furnace as claimed in claim 1, **characterised in that** blow parts (3b) of the blow enclosures are installed at an acute angle in relation to the direction of travel of the glass, the angle being from 2 to 10 degrees.

12. A tempering furnace as claimed in claim 1, **characterised in that** the shape of the blow nozzles (11) is such that the jet discharged from them is wider in the lateral direction of the tempering furnace than in the direction of travel of the glass sheet within the furnace.

13. A tempering furnace as claimed in claim 1, **characterised in that** one blow nozzle (11) of the second convection blow means covers at most 3 separate flow openings (E), whose focusing centre points on the bottom surface of the glass are at different locations by at least 5 mm and at most 60 in the lateral direction of the furnace.

14. A tempering furnace as claimed in claim 1, **characterised in that** the blow nozzles (11) of the second convection blow means blow from successive gaps between rollers in the lateral direction of the furnace onto locations differing by at least 10 mm on the bottom surface of the glass sheet.

15. A tempering furnace as claimed in claim 1, **characterised in that** the blow openings of one separately adjustable blow zone of the second convection blow means consists of 2 blow nozzles (11), at most.

16. A method for heating a glass sheet for tempering, in which method the glass sheet runs on a roller track in a tempering furnace, whereby the glass sheet is heated from the top and bottom sides, and the top surface of the glass sheet is heated by hot air jets from first convection blow devices, which are formed by sucking air from inside the tempering furnace and pressurizing said hot air, heating it with electric elements (8) inside blow enclosures (6), blowing the air as jets towards the top surface of the glass sheet, and blowing pressurised air taken from outside the tempering furnace onto the bottom surface of the glass sheet by second convection blow means, **characterised in that** the heating effect on the top surface of the glass sheet by the air jets discharging from the blow enclosures of the first convection blow means towards the glass sheet is adjusted by adjusting the feeding of electric current to the electric elements, and the heating effect on the bottom surface of the glass sheet by air jets discharged from the blow nozzles (11) of the second convention blow devices of the tempering furnace is adjusted by adjusting the feeding of an air stream to the blow nozzles, and the heating effect is adjusted weaker at the front and rear end, and side edges, of the glass sheet moving in the tempering furnace than in the centre area of the glass sheet.

17. A method as claimed in claim 16, **characterised in that** the blow pressure from the blow nozzles of the second convection blow devices, acting on the centre area of the glass sheet, significantly rises during a heating period, at least doubling compared to the blow pressure at the early stage of heating, and the blow pressure of the first convection blow devices is at its highest at the early stage of heating.

18. A method as claimed in claim 16, **characterised by** blowing pressurised air taken from outside of the tempering furnace onto the top surface of the glass sheet by third convection blow devices, the heating effect of the air jets discharging from the blow nozzles of the third convection blow devices onto the top surface of the glass sheet being adjusted by adjusting the feeding of an air stream to the blow nozzles, and the heating effect is adjusted weaker at the front and rear end, and/or side edges, of the glass sheet moving in the tempering furnace than in the centre area of the glass sheet.

## Patentansprüche

1. Vorspannofen für eine Glasscheibe, der einen Transporteur für die Glasscheibe, einen Detektor, der Informationen liefert, die zur Bestimmung der Formabmessungen einer Glasladung erforderlich sind, und eine Vorrichtung aufweist, die Informationen erzeugt, die zur Bestimmung des momentanen Ortes der Glasscheibe innerhalb des Vorspannofens erforderlich sind, eine erste Konvektionsblaseinrichtung zum Erhitzen der Glasscheibe durch Heißluftstrahlen, wobei die erste Konvektionsblaseinrichtung ein Gebläse umfasst, das Luft, die aus dem Vorspannofen angesaugt wird, unter Druck setzt, sowie Luftkanäle, um Luft vom Gebläse zu Blasgehäusen (6) zu leiten, die in ihren der Glasscheibe zugewandten Oberflächen Blasöffnungen (9) aufweisen, aus denen Luft in Form von Strahlen auf eine obere Fläche der Glasscheibe abgegeben wird, elektrische Elemente (8) im Inneren der Blasgehäuse, die Luft erwärmen, und zweite Konvektionsblasmittel, Steuervorrichtungen zur Steuerung von Ventilen der zweiten Konvektionsblasmittel auf der Grundlage der Formabmessungen der Glasladung und der Lage der Glasscheibe, durch welche zweite Konvektionsblasmittel Druckluft außerhalb des Vorspannofens zu Blasdüsen (11) geleitet werden kann, aus denen Luft in Form von Strahlen in Richtung einer unteren Fläche der Glasscheibe ausgestoßen wird, **dadurch gekennzeichnet, dass** die elektrischen Elemente und Blasgehäuse der ersten Konvektionsblasvorrichtungen eine Vielzahl von getrennt einstellbaren Blaszonen in Längs- und Querrichtung des Vorspannofens bilden, in denen die Heizwirkung der Luftstrahlen auf die Glasscheibe durch Einstellen der Stromzufuhr zu den elektrischen Elementen einstellbar ist, wobei mindestens 40 Stück (N1) dieser getrennt einstellbaren Blaszonen im Vorspannofen vorhanden sind und die Blasdüsen (11) der zweiten Konvektionsblaseinrichtung des Vorspannofens eine Vielzahl von getrennt einstellbaren Blaszonen in der Längs- und Querrichtung des Vorspannofens bilden, in denen die Erwärmungswirkung der aus den Blasdüsen (11) austretenden Strahlen auf die Glasscheibe durch Einstellen der Zuführung eines Luftstroms zu den Blasdüsen einstellbar ist, wobei mindestens 40 Stück (N2) dieser getrennt einstellbaren Blaszonen im Vorspannofen vorhanden sind.

2. Vorspannofen nach Anspruch 1, **dadurch gekennzeichnet, dass** die getrennt einstellbaren Blaszonen der ersten Konvektionsblaseinrichtung in Bewegungsrichtung der Glasscheibe einen Abstand (L1) von weniger als 1500 mm aufweisen, und einen Abstand (W1) von höchstens 300 mm in der Richtung quer zur Bewegungsrichtung der Glasscheibe, und die getrennt einstellbaren Blaszonen des zweiten Konvektionsblasmittels haben einen Abstand (L2) von höchstens 500 mm in der Bewegungsrichtung der Glasscheibe, und mit einem Abstand (W2) von höchstens 250 mm in der Richtung quer zur Bewegungsrichtung der Glasscheibe.

3. Vorspannofen nach Anspruch 1, **dadurch gekennzeichnet, dass** die getrennt einstellbaren Blaszonen der ersten Konvektionsblaseinrichtung in Bewegungsrichtung der Glasscheibe einen Abstand (L1) von weniger als 1100 mm aufweisen, und einen Abstand (W1) von höchstens 160 mm in der Richtung quer zur Bewegungsrichtung der Glasscheibe, und die getrennt einstellbaren Blaszonen des zweiten Konvektionsblasmittels haben einen Abstand (L2) von höchstens 300 mm in der Bewegungsrichtung der Glasscheibe, und einen Abstand (W2) von nahezu 140 mm in der Richtung quer zur Bewegungsrichtung der Glasscheibe.

4. Vorspannofen nach Anspruch 1, **dadurch gekennzeichnet, dass** mindestens 6 getrennt einstellbare Blaszonen der ersten Konvektionsblaseinrichtung in seitlicher Richtung des Vorspannofens in demselben seitlichen Bereich vorhanden sind, und mindestens 8 getrennt einstellbare Blaszonen der zweiten Konvektionsblaseinrichtung in Querrichtung des Vorspannofens am gleichen Rollenspalt und mindestens 16 Stück an zwei aufeinanderfolgenden Rollenspalten.

5. Vorspannofen nach Anspruch 1, **dadurch gekennzeichnet, dass** in Längsrichtung des Vorspannofens im selben Längsbereich mindestens 6 getrennt einstellbare Blaszonen der ersten Konvektionsblaseinrichtung vorhanden sind und mindestens 12 getrennt einstellbare Blaszonen der zweiten Konvektionsblaseinrichtung in Längsrichtung des Vorspannofens in der im Wesentlichen gleichen Längslinie.

6. Vorspannofen nach Anspruch 1, **dadurch gekennzeichnet, dass** im Vorspannofen mindestens 80 (N1) getrennt einstellbare Blaszonen der ersten Konvektionsblaseinrichtung vorhanden sind und mindestens 160 getrennt einstellbare Blaszonen der zweiten Konvektionsblaseinrichtung im Vorspannofen.

7. Vorspannofen nach Anspruch 1, **dadurch gekennzeichnet, dass** zusätzlich zu der ersten und zweiten Konvektionsblaseinrichtung eine dritte Konvektionsblaseinrichtung im Vorspannofen oberhalb der Glasscheibe vorhanden ist, durch die Druckluft außerhalb des Vorspannofens zu Blasdüsen der dritten Blaseinrichtung geleitet werden kann, die eine Vielzahl von getrennt einstellbaren Blaszonen in Längs- und Querrichtung des Vorspannofens bilden, bei dem die Wärmewirkung der von den Blasdüsen auf die Glasscheibe abgegebenen Luftstrahlen durch Einstellen der Zufuhr eines Luftstroms zu den Blasdüsen einstellbar ist, und der Vorspannofen hat mindestens 40 der getrennt einstellbare Blaszonen.

8. Vorspannofen nach Anspruch 7, **dadurch gekennzeichnet, dass** den Blasdüsen der dritten Blaseinrichtung Luft durch Zuleitungen zugeführt wird, die durch die Decke des Vorspannofens verlaufen und die so beschaffen sind, dass sie in den Zwischenräumen zwischen den Blasgehäusen (6) verlaufen, sodass sich die Blasdüsen in den Zwischenräumen zwischen den Blasgehäusen (6) oder näher an der Glasscheibe befinden, als die Blasöffnungen (9) der ersten Konvektionsblaseinrichtung.

9. Vorspannofen nach Anspruch 1, **dadurch gekennzeichnet, dass** eine separat einstellbare Blaszone der ersten Konvektionsblaseinrichtung eine Heizfläche (A1) von höchstens 1500 cm² des Vorspannofens abdeckt und eine separat einstellbare Blaszone der zweiten Konvektionsblaseinrichtung eine Heizfläche (A2) von höchstens 600 cm² des Vorspannofens abdeckt.

10. Vorspannofen nach Anspruch 1, **dadurch gekennzeichnet, dass** die Zuführungsrohre (12) der zweiten Konvektionsblaseinrichtung so beschaffen sind, dass sie durch den Boden des Vorspannofens und zwischen den Spalten der unteren elektrischen Elemente in den Vorspannofen einlaufen, sodass die Blasdüsen Luft aus den Spalten zwischen den Rollen mit einem vertikalen Blasabstand von nicht mehr als 150 mm auf die untere Oberfläche der Glasscheibe blasen.

11. Vorspannofen nach Anspruch 1, **dadurch gekennzeichnet, dass** die Blasteile (3b) der Blasgehäuse in einem spitzen Winkel zur Bewegungsrichtung des Glases eingebaut sind, wobei der Winkel 2 bis 10 Grad beträgt.

12. Vorspannofen nach Anspruch 1, **dadurch gekennzeichnet, dass** die Form der Blasdüsen (11) so beschaffen ist, dass der aus ihnen austretende Strahl in seitlicher Richtung des Vorspannofens breiter ist als in der Laufrichtung der Glasscheibe im Ofen.

13. Vorspannofen nach Anspruch 1, **dadurch gekennzeichnet, dass** eine Blasdüse (11) der zweiten Konvektionsblaseinrichtung höchstens 3 getrennte Strömungsöffnungen (E) abdeckt, deren Fokussierungsmittelpunkte auf der Bodenfläche des Glases in Seitenrichtung des Ofens um mindestens 5 mm und höchstens 60 versetzt sind.

14. Vorspannofen nach Anspruch 1, **dadurch gekennzeichnet, dass** die Blasdüsen (11) der zweiten Konvektionsblaseinrichtung aus aufeinanderfolgenden Rollenzwischenräumen in der Querrichtung des Ofens auf Stellen blasen, die sich um mindestens 10 mm auf der Bodenfläche der Glasscheibe unterscheiden.

15. Vorspannofen nach Anspruch 1, **dadurch gekennzeichnet, dass** die Blasöffnungen einer separat einstellbaren Blaszone der zweiten Konvektionsblaseinrichtung aus maximal 2 Blasdüsen (11) bestehen.

16. Verfahren zum Erwärmen einer Glasscheibe zum Vorspannen, bei dem die Glasscheibe auf einer Rollenbahn in einem Vorspannofen läuft, wobei die Glasscheibe von der Ober- und Unterseite erwärmt wird und die Oberseite der Glasscheibe durch heiße Luftstrahlen aus ersten Konvektionsblasvorrichtungen erwärmt wird, die dadurch gebildet werden, dass Luft aus dem Inneren des Vorspannofens angesaugt und unter Druck gesetzt wird, diese heiße Luft mit elektrischen Elementen (8) innerhalb von Blasgehäusen (6) erwärmt wird, die Luft strahlförmig auf die Oberseite der Glasscheibe geblasen wird und von außerhalb des Vorspannofens entnommene Druckluft durch zweite Konvektionsblasvorrichtungen auf die Unterseite der Glasscheibe geblasen wird, **dadurch gekennzeichnet, dass** die Heizwirkung auf die Oberseite der Glasscheibe durch die Luftstrahlen, die aus den Blasgehäusen der ersten Konvektionsblaseinrichtung in Richtung der Glasscheibe austreten, durch Einstellen der Zufuhr von elektrischem Strom zu den elektrischen Elementen eingestellt wird, und die Erwärmung der Unterseite der Glasscheibe durch Luftstrahlen, die aus den Blasdüsen (11) der zweiten konventionellen Blasvorrichtungen des Vorspannofens austreten, wird durch Einstellung der Zufuhr eines Luftstroms zu den Blasdüsen geregelt, und die Wärmewirkung ist am vorderen und hinteren Ende sowie an den Seitenkanten der im Vorspannofen bewegten Glasscheibe schwächer eingestellt als im mittleren Bereich der Glasscheibe.

17. Verfahren nach Anspruch 16, **dadurch gekennzeichnet, dass** der Blasdruck aus den Blasdüsen der zweiten Konvektionsblasvorrichtungen, der auf den mittleren Bereich der Glasscheibe einwirkt, während einer Erwärmungsperiode deutlich ansteigt und sich im Vergleich zum Blasdruck in der frühen Phase der Erwärmung mindestens verdoppelt, und dass der Blasdruck der ersten Konvektionsblasvorrichtungen in der frühen Phase der Erwärmung am höchsten ist.

18. Verfahren nach Anspruch 16, **dadurch gekennzeichnet, dass** von außerhalb des Vorspannofens entnommene Druckluft durch dritte Konvektionsblasvorrichtungen auf die Oberseite der Glasscheibe geblasen wird, wobei die Heizwirkung der aus den Blasdüsen der dritten Konvektionsblasvorrichtung auf die Oberseite der Glasscheibe austretenden Luftstrahlen durch Einstellen der Zufuhr eines Luftstroms zu den Blasdüsen eingestellt wird, und die Erwärmung am vorderen und hinteren Ende bzw. an den Seitenkanten der im Vorspannofen bewegten Glasscheibe schwächer eingestellt ist als im mittleren Bereich der Glasscheibe.

## Revendications

1. Four de trempe pour vitre qui comporte un convoyeur pour la vitre, un détecteur fournissant des informations requises pour déterminer les dimensions de forme d'une charge de verre, un dispositif produisant des informations requises pour déterminer l'emplacement momentané de la vitre à l'intérieur du four de trempe, un premier moyen de soufflage à convection pour chauffer la vitre par des jets d'air chaud, le premier moyen de soufflage à convection incluant un souffleur pressurisant de l'air aspiré par le four de trempe, des canaux à air pour conduire l'air du souffleur aux enceintes de soufflage (6) qui ont, sur leur surface tournée vers la vitre, des ouvertures de soufflage (9) depuis lesquelles de l'air est déchargé sous forme de jets vers une surface supérieure de la vitre, des éléments électriques (8) à l'intérieur des enceintes de soufflage chauffant l'air, et un deuxième moyen de soufflage à convection, des dispositifs de commande pour commander les vannes du deuxième moyen de soufflage à convection se basant sur les dimensions de forme de la charge de verre et l'emplacement de la vitre, au moyen desquels de l'air comprimé période au four de trempe peut être conduit vers des buses de soufflage (11) depuis lesquelles de l'air est déchargé sous forme de jets vers une surface inférieure de la vitre, **caractérisé en ce que** les éléments électriques et les enceintes de soufflage des premiers dispositifs de soufflage à convection forment une pluralité de zones de soufflage réglables séparément dans le sens longitudinal et latéral du four de trempe, dans lequel l'effet chauffant des jets d'air déchargés par les buses de soufflage (11) sur la vitre est conçu pour être réglable en réglant l'alimentation d'un courant électrique vers les éléments électriques, sachant qu'il est prévu au moins 40 unités (N1) de ces zones de soufflage réglables séparément dans le four de trempe, et les buses de soufflage (11) des deuxièmes moyens de soufflage à convection du four de trempe forment une pluralité de zones de soufflage réglables séparément dans le sens longitudinal et latéral du four de trempe, dans lequel l'effet chauffant des jets déchargés par les buses de soufflage (11) sur la vitre est conçu pour être réglable en réglant l'alimentation d'un flux d'air vers les buses de soufflage, sachant qu'il est prévu au moins 40 unités (N2) de ces zones de soufflage réglables séparément dans le four de trempe.

2. Four de trempe selon la revendication 1, **caractérisé en ce que** les zones de soufflage réglables séparément du premier moyen de soufflage à convection sont prévues avec une séparation (L1) d'au moins 1500 mm dans le sens de mouvement de la vitre, et avec une séparation (W1) d'au plus 300 mm dans le sens transversal au sens de mouvement de la vitre, et que les zones de soufflage réglables séparément du deuxième moyen de soufflage à convection sont prévues avec une séparation (L2) d'au plus 500 mm dans le sens de mouvement de la vitre, et avec une séparation (W2) d'au plus 250 mm dans le sens transversal au sens de mouvement de la vitre.

3. Four de trempe selon la revendication 1, **caractérisé en ce que** les zones de soufflage réglables séparément du premier moyen de soufflage à convection sont dotées d'une séparation (L1) de moins de 1100 mm dans le sens de mouvement de la vitre, et d'une séparation (W1) d'au plus 160 mm dans le sens transversal au sens de mouvement de la vitre, et que les zones de soufflage réglables séparément du deuxième moyen de soufflage à convection sont prévues avec une séparation (L2) d'au plus 300 mm dans le sens de mouvement de la vitre, et avec une séparation (W2) d'au plus 140 mm dans le sens transversal au sens de mouvement de la vitre.

4. Four de trempe selon la revendication 1, **caractérisé en ce qu'**il y a au moins 6 unités de zones de soufflage réglables séparément du premier moyen de soufflage à convection dans le sens latéral du four de trempe dans la même zone latérale, et au moins 8 unités de zones de soufflage réglables séparément du deuxième moyen de soufflage à convection dans le sens latéral du four de trempe au niveau du même intervalle entre les roulettes, et au moins 16 unités au niveau de deux intervalles successifs entre les roulettes.

5. Four de trempe selon la revendication 1, **caractérisé en ce qu'**il y a au moins 6 unités de zones de soufflage réglables séparément du premier moyen de soufflage à convection dans le sens longitudinal du four de trempe dans la même zone longitudinale, et au moins 12 unités de zones de soufflage réglables séparément du deuxième moyen de soufflage à convection dans le sens longitudinal du four de trempe dans le sens longitudinal du four de trempe sensiblement dans la même ligne longitudinale.

6. Four de trempe selon la revendication 1, **caractérisé en ce qu'**il y a au moins 80 unités (N1) de zones de soufflage réglables séparément du premier moyen de soufflage à convection dans le four de trempe, et au moins 160 unités de zones de soufflage réglables séparément du deuxième moyen de soufflage à convection dans le four de trempe.

7. Four de trempe selon la revendication 1, **caractérisé en ce que**, en plus des premier et deuxième moyens de soufflage à convection, il y a un troisième moyen de soufflage à convection dans le four de trempe au-dessus de la vitre, au moyen duquel de l'air comprimé extérieur au four de trempe peut être conduit pour faire souffler des buses dans le troisième moyen de soufflage, qui forme une pluralité de zones de soufflage réglables séparément dans les sens longitudinale et latéral du four de trempe, dans lequel l'effet chauffant des jets d'air déchargés par les buses de soufflage sur la vitre est conçu pour être réglable en réglant l'alimentation en flux d'air des buses de soufflage, et que le four de trempe comporte au moins 40 unités de zones de soufflage réglables séparément.

8. Four de trempe selon la revendication 7, **caractérisé en ce que** de l'air est apporté aux buses de soufflage du troisième moyen de soufflage par des tuyaux d'alimentation qui passent à travers le plafond du four de trempe et qui sont aptes à passer dans les intervalles entre les enceintes de soufflage (6) de manière à ce que les buses de soufflage se trouvent dans les intervalles entre les enceintes de soufflage (6) ou plus près de la vitre que les ouvertures de soufflage (9) du premier moyen de soufflage à convection.

9. Four de trempe selon la revendication 1, **caractérisé en ce qu'**une zone de soufflage réglable séparément du premier moyen de soufflage à convection couvre une superficie de surface chauffante (A1) d'au plus 1500 cm² du four de trempe, et qu'une zone de soufflage réglable séparément du deuxième moyen de soufflage à convection couvre une superficie de surface chauffante (A2) d'au plus 600 cm² du four de trempe.

10. Four de trempe selon la revendication 1, **caractérisé en ce que** les tuyaux d'alimentation (12) du deuxième moyen de soufflage à convection sont aptes à passer dans le four de trempe à travers son fond et entre les intervalles des éléments électriques du fond de manière à ce que les buses de soufflage soufflent de l'air vers la surface inférieure de la vitre depuis les intervalles entre les roulettes avec la distance de soufflage verticale ne dépassant pas 150 mm.

11. Four de trempe selon la revendication 1, **caractérisé en ce que** les pièces de soufflage (3b) des enceintes de soufflage sont installées pendant un angle aigu par rapport au sens de déplacement du verre, l'angle étend de 2 à 10 degrés.

12. Four de trempe selon la revendication 1, **caractérisé en ce que** la forme des buses de soufflage (11) est telle que le jet déchargé par celle-ci soit plus large dans le sens latéral du four de trempe que le sens de déplacement de la vitre dans le four.

13. Four de trempe selon la revendication 1, **caractérisé en ce qu'**une buse de soufflage (11) du deuxième moyen de soufflage à convection couvre au plus 3 ouvertures d'écoulement séparées (E) dont les points centraux de focalisation sur la surface de fond du verre sont à des emplacements différant à raison d'au moins 5 mm et d'au plus 60 dans le sens latéral du four.

14. Four de trempe selon la revendication 1, **caractérisé en ce que** les buses de soufflage (11) du deuxième moyen de soufflage à convection entre deux depuis des intervalles successifs entre les roulettes dans le sens latéral du four sur des emplacements différant à raison d'au moins 10 mm sur la surface inférieure de la vitre.

15. Four de trempe selon la revendication 1, **caractérisé en ce que** les ouvertures de soufflage d'une zone de soufflage réglable séparément du deuxième moyen de soufflage à convection consistent en 2 buses de soufflage (11) au plus.

16. Procédé de chauffage d'une vitre pour trempe, dans lequel procédé la vitre passe sur une piste à roulettes dans un four de trempe, la vitre étant chauffée depuis les faces supérieure et inférieure, et la surface supérieure de la vitre étant chauffée par des jets d'air chaud par des premiers dispositifs de soufflage à convection qui sont formés en aspirant de l'air dans l'intérieur du four de trempe et en comprimant ledit air chaud, en le chauffant avec des éléments électriques (8) à l'intérieur d'enceintes de soufflage (6), en soufflant l'air sous forme de jets vers la surface supérieure de la vitre, et en soufflant l'air comprimé pris à l'extérieur du four de trempe sur la surface inférieure de la vitre par un deuxième de soufflage à convection, **caractérisé en ce que** l'effet chauffant exercé sur la surface supérieure de la vitre par les jets d'air se déchargeant depuis les enceintes de soufflage du premier moyen de soufflage à convection vers la vitre est réglé en réglant l'alimentation en courant électrique des éléments électriques, et que l'effet chauffant exercé sur la surface inférieure de la vitre par les jets d'air déchargés par les buses de soufflage (11) des deuxièmes dispositifs de soufflage à convection du four de trempe est réglé en réglant l'alimentation en flux d'air des buses de soufflage, et que l'effet chauffant est réglé à un niveau plus faible à l'extrémité avant et arrière, et sur les bords latéraux, de la vitre se déplaçant dans le four de trempe que dans la zone centrale de la vitre.

17. Procédé selon la revendication 16, **caractérisé en ce que** la pression de soufflage depuis les buses de soufflage des seconds dispositifs de soufflage à convection, en agissant sur la zone centrale de la vitre, augmente significativement pendant une période de chauffe, en doublant au moins comparativement à la pression de soufflage au stade précoce de chauffe, et que la pression de soufflage des premiers dispositifs de soufflage à convection est la plus élevée au stade précoce de chauffe.

18. Procédé selon la revendication 16, **caractérisé par** le soufflage d'air comprimé pris à l'extérieur du four de trempe sur la surface supérieure de la vitre par des troisièmes dispositifs de soufflage à convection, l'effet chauffant des jets d'air se déchargeant depuis les buses de soufflage des troisièmes dispositifs de soufflage à convection sur la surface supérieure de la vitre étant réglé en réglant l'alimentation en flux d'air des buses de soufflage, et que l'effet chauffant est réglé à un niveau plus faible à l'extrémité avant et arrière, et/ou sur les bords latéraux, de la vitre se déplaçant dans le four de trempe que dans la zone centrale de la vitre.
